Europäisches Patentamt

European Patent Office

Office européen des brevets

(19)

(11) Veröffentlichungsnummer : **0 112 446**
**B1**

(12) **EUROPÄISCHE PATENTSCHRIFT**

(45) Veröffentlichungstag der Patentschrift :
04.03.87

(21) Anmeldenummer : 83109882.7

(22) Anmeldetag : 04.10.83

(51) Int. Cl.⁴ : **B 60 N   1/06**

(54) Gelenkbeschlag für Kraftfahrzeugsitze mit verstellbarer Lehne.

(30) Priorität : 01.12.82 DE 3244399

(43) Veröffentlichungstag der Anmeldung :
04.07.84 Patentblatt 84/27

(45) Bekanntmachung des Hinweises auf die Patenterteilung : 04.03.87 Patentblatt 87/10

(84) Benannte Vertragsstaaten :
**BE FR GB IT NL SE**

(56) Entgegenhaltungen :
DE-A- 2 734 565
DE-A- 2 834 492
DE-C- 1 680 128

(73) Patentinhaber : **P.A. Rentrop, Hubbert & Wagner Fahrzeugausstattungen GmbH & Co. KG**
**Nordsehler Strasse 38**
**D-3060 Stadthagen (DE)**

(72) Erfinder : **Schöttker, Willi**
**Landstrasse 104**
**D-3061 Nordsehl (DE)**

(74) Vertreter : **Thielking, Bodo, Dipl.-Ing. et al**
**Patentanwälte Dipl.-Ing. Bodo Thielking Dipl.-Ing. Otto Elbertzhagen Gadderbaumer Strasse 20**
**D-4800 Bielefeld 1 (DE)**

## Beschreibung

Die Erfindung betrifft einen Gelenkbeschlag für Kraftfahrzeugsitze mit verstellbarer Lehne, bei dem ein dem Sitz zugeordneter fester Gelenkteil und ein der Lehne zugeordneter schwenkbarer Gelenkteil über eine Schwenkachse miteinander verbunden sind und ein erstes Gelenkteil einen Innenzahnkranz aufweist, an dem ein einen Teil eines Taumelgetriebes bildender Stirnradbereich abläuft, der mit dem zweiten Gelenkteil gekoppelt ist, wobei der Innenzahnkranz mit dem zugehörigen Gelenkteil einstückig verbunden und als Ausdrückung aus diesem Gelenkteil ausgebildet ist, wobei in den zentralen Überbrückungsbereichen der Verzahnungen jeweils Lageröffnungen zur Aufnahme der Schwenkachse bzw. von deren Exzenter vorgesehen sind.

Derartige Gelenkbeschläge mit Taumelgetriebe sind in unterschiedlichen Ausführungen bekannt. Bei einem ersten bekannten Beschlag dieser Art ist das Stirnrad des Taumelgetriebes an das zweite Gelenkteil angeformt (DE-C-16 80 128). Bei einem Verdrehen der Exzenterwelle zum Verstellen der Rückenlehnenneigung wandert die Rückenlehne um das Maß der Exzentrizität aus.

Bei einem anderen bekannten Beschlag der eingangs erwähnten Art ist es bekannt, das Stirnrad des Taumelgetriebes lose auf dem Exzenter einer Schwenkachse zu lagern, die in miteinander fluchtenden Bohrungen der beiden unterschiedlichen Gelenkteile gelagert ist. Das bekannte Stirnrad besitzt eine Doppelverzahnung mit zwei unterschiedlich großen und konzentrisch zueinander angeordneten Zahnbereichen, deren erster mit der Innenverzahnung des ersten und deren zweiter mit der Innenverzahnung des zweiten Gelenkteils kämmt.

Allen bekannten Gelenkbeschlägen der im Oberbegriff erwähnten Art haftet ein wesentlicher Nachteil an :

Zur Übertragung der Drehbewegung und der Belastungen von einem Gelenkteil auf das andere Gelenkteil darf die Breite der wirksamen Verzahnungsbereiche ein Mindestmaß nicht unterschreiten. Dies gilt sowohl für Ausführungen mit einem drehbar auf dem Exzenter gelagerten separaten Doppelzahnrad als auch für Ausführungen, bei denen der Stirnradbereich einstückig mit einem der beiden Gelenkteile verbunden ist.

Bei einer ersten Ausführungsform mit einteilig angeformtem Stirnradbereich (DE-C-16 80 128) liegt die Rückseite des Überbrückungsbereichs des angeformten Stirnrads in einer Ebene, die mit einem Abstand hinter der Ebene des benachbarten Bereichs des zugehörigen Gelenkteils zurückkliegt. Dies bedeutet, daß die wirksame Breite der ausgedrückten Verzahnung in jedem Fall geringer als die Dicke des Ausgangsmaterials für das zugehörige Gelenkteil sein muß. Bei der bekannten Vorrichtung ist die Anbindung der Ausdrückung an dem Gelenkteil über eine Wandbrücke erzielt, die als umlaufender, die Stirnseiten der Verzahnung in axialer Richtung einstückig verbindender Verbindungssteg ausgebildet ist. Dieser Verbindungssteg kommt also zustande, indem der Stirnradbereich nicht um die volle Materialstärke aus dem Gelenkteil ausgedrückt wird. Es entstehen dabei zwei vom Durchmesser, der Zahnform und der Zähnezahl her gleiche Verzahnungen, nämlich zum einen als Innenverzahnung als Eindrückung innerhalb des Gelenkteils und zum anderen als über das Gelenkteil vorspringende ausgedrückte Außenverzahnung. Dabei liegt in axialer Richtung der Zahnlücke der Außenverzahnung jeweils ein Zahn der Innenverzahnung gegenüber. Bei dieser bekannten Lösung setzt sich die Materialstärke des Gelenkteils aus der Zahnbreite und der Stärke des Verbindungsstegs zusammen. In dem Bestreben, die Gelenkteile möglichst dünnwandig auszubilden, wurde ferner vorgeschlagen, (DE-A-28 34 492), die Innenseiten der Ausdrückungen in einer Ebene mit den Außenseiten der zugehörigen Gelenkteile anzuordnen. Dabei sollen die erforderlichen Wandbrücken zwischen den Ausdrückungen und den Gelenkteilen aus Werkstoffzonen bestehen, welche den Zahnlücken des Innenzahnkranzes und des Stirnrades benachbart sind. Bei einer solchen bekannten Lösung ist es möglich, die wirksame Zahnbreite ebenso auszubilden, wie die Dicke des Ausgangsmaterials für die Gelenkteile.

Ausgehend von dem vorstehend geschilderten Stand der Technik liegt der Erfindung die Aufgabe zugrunde, eine Vorrichtung der eingangs erwähnten Art (DE-C-1 680 128) so auszubilden, daß die Verzahnung eine über die Dicke des Ausgangsmaterials hinausgehende Zahnbreite aufweist.

Die Lösung dieser Aufgabe erfolgt erfindungsgemäß dadurch, daß sowohl der Durchmesser als auch die Zahnkontur des ausgedrückten Verzahnungsbereichs kleiner als der Durchmesser und die Zahnkontur des jeweils zugehörigen eingedrückten Verzahnungsbereichs sind, wobei die Zahnbreite des jeweils wirksamen Verzahnungsbereichs größer als die Dicke des Ausgangsmaterials ist.

Die Verzahnungen bei Gelenkbeschlägen der als bekannt vorausgesetzten Art werden üblicherweise mit einem speziellen Stanzverfahren hergestellt, welches man als Feinschneiden bezeichnet. Bei der entsprechenden Ausbildung von Patrize und Matrize kann das verdrängte überschüssige Material aus dem nicht benötigten unwirksamen Verzahnungsbereich in den jeweils wirksamen gegenüberliegenden Verzahnungsbereich fließen.

Der erfindungsgemäße Gelenkbeschlag erlaubt erstmalig die Herstellung eines Zahnbereichs mit einer Breite, die größer als die Dicke des Ausgangsmaterials ist. Dies ist eine wesentliche Verbesserung gegenüber dem Stand der Technik, weil maßgebend für die Bemessung der Blechdicke bisher die erforderliche Zahnbreite der wirksamen Verzahnungsbereiche war. Für die

Aufnahme der auftretenden Belastung waren bisher die Blechdicken für die Gelenkteile notwendigerweise überdimensioniert. Die erfindungsgemäße Lösung erlaubt nun unter Beibehaltung einer vorgegebenen Zahnbreite eine Reduzierung der Blechdicke mit der Folge, daß Kosten- und Gewichtsersparnisse gegenüber den bekannten Lösungen möglich werden.

Bei einer bevorzugten Ausführungsform der Erfindung ist der Stirnradbereich einstückig mit dem zugehörigen Gelenkteil verbunden und die Zahnbreite des Stirnradbereichs größer als die Dicke des Ausgangsmaterials des zugehörigen Gelenkteils.

Schließlich wird erfindungsgemäß vorgeschlagen, daß die Zahnkontur des jeweils ausgedrückten Verzahnungsbereichs umlaufend kleiner als die Zahnkontur des jeweils zugehörigen eingedrückten Verzahnungsbereichs ist. Bei einer solchen Ausführungsform ergibt sich ein umlaufender Verbindungssteg zwischen der Ausdrückung und dem Gelenkteil mit der Folge, daß auch unter stärkster Belastung die Ausdrückung nicht vom Gelenkteil abscheren kann.

Nachstehend werden bevorzugte Ausführungsformen der Erfindung anhand der Zeichnung im einzelnen beschrieben. Es zeigen :

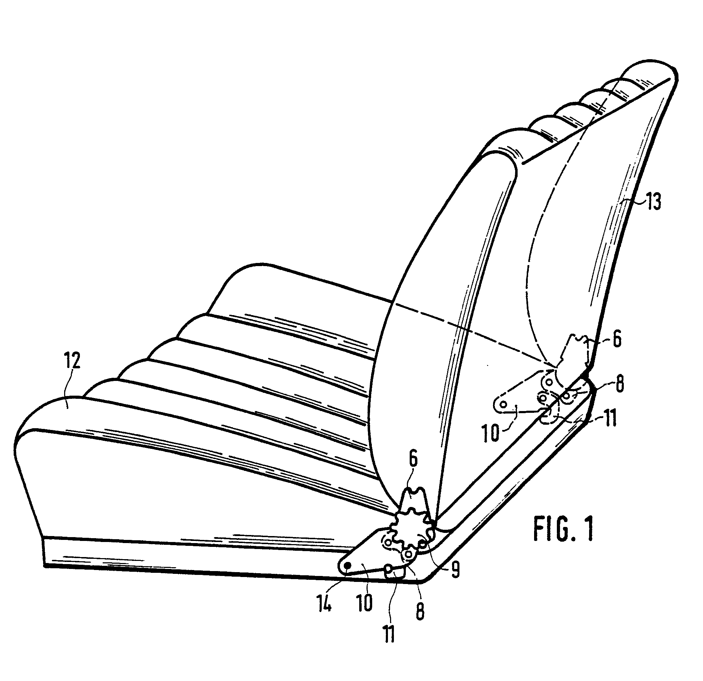

Figur 1 eine perspektivische Ansicht eines Fahrzeugsitzes mit dem erfindungsgemäßen Gelenkbeschlag,

Figur 2 eine Seitenansicht des Gelenkbeschlags mit weggebrochen dargestelltem Bereich,

Figur 3 eine Schnitt entlang Ebene III-III in Figur 2,

Figur 4 einen Längsschnitt durch das zweite Gelenkteil,

Figur 4a den Bereich bei IVa gemäß Figur 4 in größerem Detail,

Figur 4b eine Ansicht des Bereichs gemäß 4a in Richtung des Pfeils IVb,

Figur 5 einen Längsschnitt durch das erste Gelenkteil,

Figur 5a die Einzelheit bei Va in Figur 5 in größerem Detail,

Figur 5b eine Ansicht des Bereichs gemäß Figur 5a in Richtung des Pfeils V,

Figur 6 einen Längsschnitt durch eine zweite Ausführungsform des zweiten Gelenkteils,

Figur 6a die Einzelheit bei VIa in Figur 6 in größerem Detail,

Figur 6b eine Ansicht des Bereichs gemäß Figur 6a in Richtung des Pfeils VIb,

Figur 7 einen Längsschnitt durch eine zweite Ausführungsform des ersten Gelenkteils,

Figur 7a den Bereich bei VIIa in Figur 7 in größerem Detail,

Figur 7b eine Ansicht auf den Bereich gemäß Figur 7a in Richtung des Pfeils VIIb.

An einem Fahrzeugsitz 12 ist eine Rückenlehne 13 angelenkt. Ein erstes Gelenkteil 6 ist an der Rückenlehne befestigt und ein zweites Gelenkteil 8 ist fest mit dem Fahrzeugsitz 12 verbunden. Das zweite Gelenkteil 8 ist an einem Beschlagteil 10 befestigt, der zum Vorklappen der Rückenlehne um die Schwenkachse 14 verschwenkbar ist. Die Verriegelung der Rückenlehne erfolgt mit Hilfe einer Klinke 11.

Ein Handrad 9 ist fest mit einer Schwenkachse 7 verbunden, die drehbar in einer zentralen Bohrung 8c des zweiten Gelenkteils 8 gelagert ist. Die Schwenkachse 7 besitzt einen exzentrischen Bereich 7a, der in einer zentralen Bohrung 6c des ersten Gelenkteils 6 vorgesehen ist.

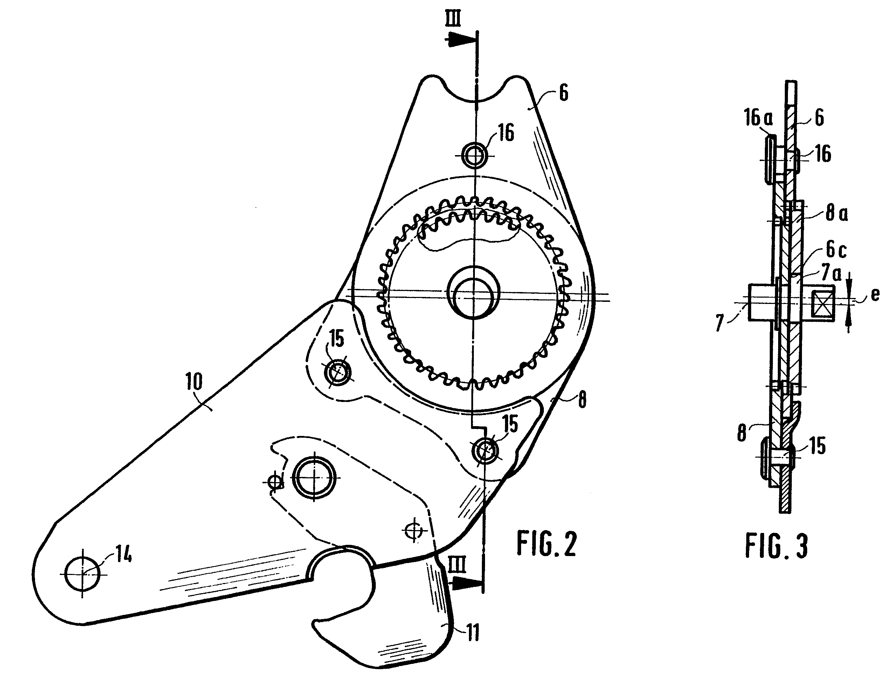

Der zweite Gelenkteil 8 besitzt eine konzentrisch zur Schwenkachse 7 angeordnete gemäß Figur 3 nach rechts vorspringende ausgedrückte Stirnradverzahnung 8a. Die Stirnradverzahnung 8a steht im Eingriff mit der Innenverzahnung 6a des ersten Gelenkteils 6. Der Kopfkreis des Stirnradbereichs 8a ist um mindestens eine Zahnhöhe kleiner als der Fußkreis der zugehörigen Innenverzahnung 6a. Die Exzentrizität e des Exzenters 7a entspricht etwa der Differenz zwischen dem Fußkreis der Innenverzahnung 6a und dem Kopfkreis des Stirnradbereichs 8a. Diese Differenz ist derart bemessen, daß eine Selbsthemmung zwischen der Innenverzahnung 6a und dem Stirnradbereich 8a gewährleistet ist.

Das Beschlagteil 10 ist mit dem zweiten Gelenkteil 8 über zwei Nieten 15 verbunden.

Ein Niet 16 ist ferner mit dem ersten Gelenkteil 6 fest verbunden und übergreift mit einem Kopf 16a den abgerundeten Bereich des zweiten Gelenkteils 8. Der Kopf 16a erlaubt ein Verdrehen der beiden Gelenkteile zueinander und hält sie in Anlage aneinander.

Bei einem Verdrehen des Handrads 9 erfolgt ein Verschwenken der Schwenkachse 7 mit dem Exzenterbereich 7a. Es läuft dann der Stirnradbereich 8a an der zugehörigen Innenverzahnung 6a ab. Die Schwenkachse 7 fällt zusammen mit dem Zentrum der Bohrung 8c des zweiten Gelenkteils 8.

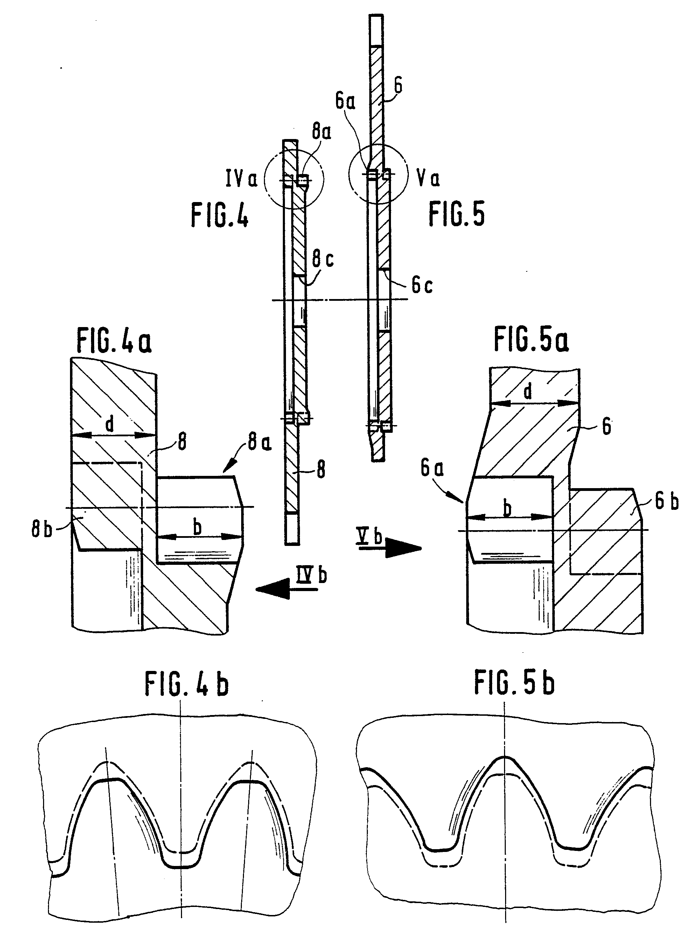

Aus den Figuren 4 bis 5b ist die Ausbildung der beiden Gelenkteile 6 und 8 im Bereich der Verzahnung genauer ersichtlich :

Die Verzahnungsbereiche sowohl im ersten Gelenkteil 6 als auch im zweiten Gelenkteil 8 werden mit einem speziellen Stanzverfahren, dem sogenannten Feinschneiden hergestellt. Bei dem zweiten Gelenkteil 8 ist gemäß Figur 4 und 4a die wirksame Verzahnung 8a auf der rechten Seite als herausgedrückter Bereich entstanden, während auf der gemäß Figur 4 und 4a linken Seite der nicht wirksame Verzahnungsbereich entstanden ist. Der ausgedrückte wirksame Verzahnungsbereich 8a entspricht lediglich annähernd dem Bild des eingedrückten linken Verzahnungsbereichs mit der Maßgabe, daß dort, wo auf der rechten Seite eine Zahnlücke vorgesehen ist, auf der linken Seite jeweils ein Zahn stehen bleibt. Der Durchmesser und die Zahnkontur des ausgedrückten Verzahnungsbereichs 8a ist kleiner als der Durchmesser und die Zahnkontur des zugehörigen eingedrückten linken Verzahnungsbereichs. Diese Maßnahme hat zur Folge, daß beim zweiten Beschlagteil eine überschüssige Materialmenge in den Bereich der wirksamen Verzahnung 8a fließen und damit die Zahnbreite b größer werden kann als die Dicke d des Ausgangsmaterials.

Bei dem zugehörigen ersten Gelenkteil 6 sind ebenfalls die Zahnkontur und der Durchmesser des ausgedrückten Verzahnungsbereichs 6b kleiner als der Durchmesser und die Zahnkontur des zugehörigen eingedrückten Verzahnungsbereichs 6a. Unterschiedlich ist dabei lediglich, daß der eingedrückte Bereich 6a den wirksamen Verzahnungsbereich darstellt, während der ausgedrückte Verzahnungsbereich 6b den unwirksamen, sich aufgrund des Feinschneidverfahrens ergebenden Verzahnungsbereich darstellt. Bei den Ausführungsbeispielen gemäß Figuren 4 bis 5b ist die Zahnkontur des jeweils ausgedrückten Verzahnungsbereichs 8a bzw. 6b jeweils umlaufend kleiner als die Zahnkontur des zugehörigen eingedrückten Verzahnungsbereichs 8b bzw. 6a.

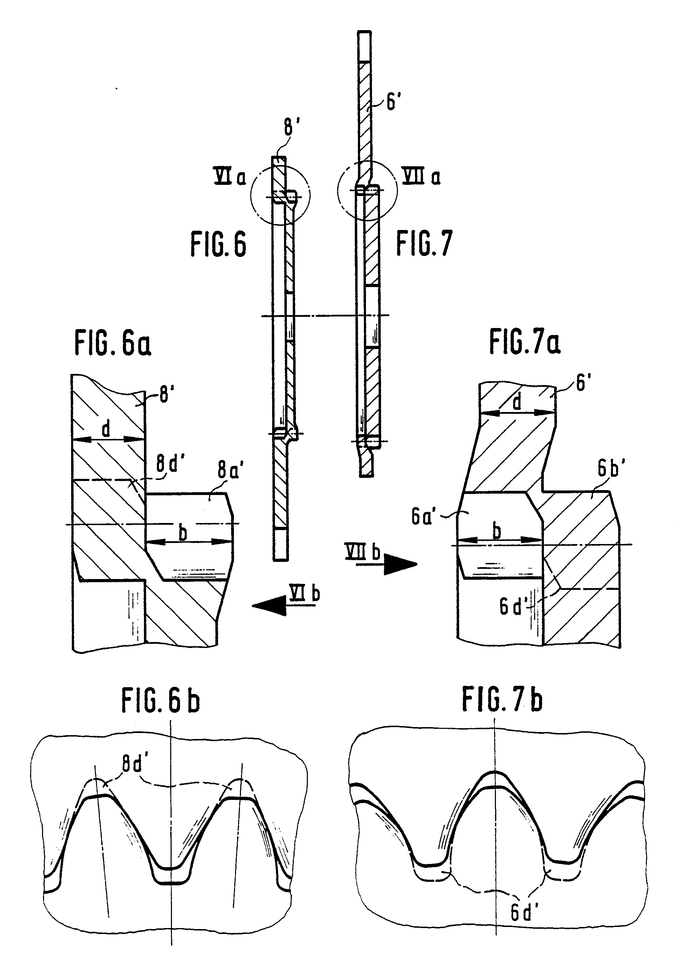

Die Ausführungsform gemäß Figuren 6 bis 7b zeigt eine Lösung, bei der der Durchmesser und die Zahnkontur des jeweils ausgedrückten Bereichs nicht umlaufend überall kleiner sind als der Durchmesser und die Zahnkontur des jeweils zugehörigen eingedrückten Verzahnungsbereichs. Dort gilt diese Bedingung nicht umlaufend über den gesamten Anbindungsbereich der Verzahnungen an den Gelenkteilen sondern lediglich für Teilbereiche der Verzahnung, beispielsweise für die Zahnspitzen 8d'. Hierdurch wird eine schwächere Anbindung des Verzahnungsbereichs 8a' am zweiten Gelenkteil 8' erzeugt.

Eine analoge Ausbildung gilt für das erste Gelenkteil 6'. Auch dort sind die Zahnkontur und der Durchmesser des ausgedrückten, nicht wirksamen Verzahnungsbereichs 6b' nicht umlaufend kleiner als die Zahnkontur und der Durchmesser des zugehörigen eingedrückten Verzahnungsbereichs 6a' mit der Folge, daß eine Anbindung des ausgedrückten Verzahnungsbereichs in erster Linie über den Bereich 6d' in den Zahnfüßen erfolgt. Auch bei dieser Konstruktion ist die Verbindung zwischen dem ausgedrückten verzahnten Bereich 6b' und dem ersten Gelenkteil 6' schwächer als bei der in Figuren 5a und 5b dargestellten Ausführungsform.

Bei allen dargestellten Ausführungsformen ist jedoch die Zahnbreite b jeweils größer als die Dicke d des Ausgangsmaterials.

In der vorliegenden Anmeldung ist unabhängig von der Art, wie gefertigt wird, unter einem « ausgedrückten » Verzahnungsbereich derjenige Verzahnungsbereich zu verstehen, der gegenüber den benachbarten Bereichen des zugehörigen Gelenkteils vorsteht. Unter einem « eingedrückten » Verzahnungsbereich ist — ebenfalls unabhängig von der Fertigungsart — jeweils derjenige Verzahnungsbereich zu verstehen, der in einer Vertiefung des zugehörigen Gelenkteils liegt.

**Patentansprüche**

1. Gelenkbeschlag für Kraftfahrzeugsitze mit verstellbarer Lehne, bei dem ein dem Sitz (12) zugeordneter fester Gelenkteil (8) und ein der Lehne (13) zugeordneter schwenkbarer Gelenkteil (6) über eine Schwenkachse (7) miteinander verbunden sind und ein erstes Gelenkteil (6) einen Innenzahnkranz (6a) aufweist, an dem ein einen Teil eines Taumelgetriebes bildender Stirnradbereich abläuft, der mit einem zweiten Gelenkteil (8) gekoppelt ist, wobei der Innenzahnkranz (8a) mit dem zugehörigen Gelenkteil einstückig verbunden und als Ausdrückung aus diesem Gelenkteil ausgebildet ist, wobei in den zentralen Überbrückungsbereichen der Verzahnungen (6a, 8a) jeweils Lageröffnungen (6c, 8c) zur Aufnahme der Schwenkachse (7) bzw. von deren Exzenter (7a) vorgesehen sind, dadurch gekennzeichnet, daß sowohl der Durchmesser als auch die Zahnkontur des ausgedrückten Verzahnungsbereichs (8a ; 6b ; 8a' ; 6b') kleiner als der Durchmesser und die Zahnkontur des jeweils zugehörigen eingedrückten Verzahnungsbereichs (8b ; 6a ; 8b' ; 6a') sind, wobei die Zahnbreite (b) des jeweils wirksamen Verzahnungsbereichs größer als die Dicke (d) des Ausgangsmaterials ist.

2. Gelenkbeschlag nach Anspruch 1, dadurch gekennzeichnet, daß der Stirnradbereich (8a ; 8a') einstückig mit dem zugehörigen Gelenkteil (8 ; 8') verbunden und die Zahnbreite (b) des Stirnradbereichs (8a ; 8a') größer als die Dicke des Ausgangsmaterials des zugehörigen Gelenkteils (8 ; 8') ist.

3. Gelenkbeschlag nach Anspruch 1 oder 2, dadurch gekennzeichnet, daß die Zahnkontur des jeweils ausgedrückten Verzahnungsbereichs (8a ; 6b) umlaufend kleiner als die Zahnkontur des jeweils zugehörigen eingedrückten Verzahnungsbereichs (8b ; 6a) ist.

**Claims**

1. Articulated fitting for motor-vehicle seats with an adjustable backrest, in which a fixed joint part assigned to the seat (12) and a pivotable joint part (6) assigned to the backrest (13) are connected to one another *via* a pivot pin (7), and a first joint part (6) has an inner toothed rim (6a), on which runs a spur region forming part of a swashplate mechanism and coupled to a second joint part (8), the inner toothed rim (8a) being connected integrally to the associated joint part and being designed as a portion pressed out from this joint part, there being in the central bridging region of each of the toothed rims (6a, 8a) a bearing orifice (6c, 8c) for receiving the pivot pin (7) or its cams (7a), characterized in that both the diameter and the tooth contour of the pressed-out toothing region (8a ; 6b ; 8a' ; 6b') are smaller than the diameter and the tooth contour of the particular associated pressedin toothing region (8b ; 6a ; 8b' ; 6a'), the tooth width (b) of the particular effective toothing region being greater than the thickness (d) of the initial material.

2. Articulated fitting according to Claim 1, characterized in that the spur region (8a ; 8a') is connected integrally to the associated joint part (8 ; 8'), and the tooth width (b) of the spur region (8a ; 8a') is greater than the thickness of the initial material of the associated joint part (8 ; 8′).

3. Articulated fitting according to Claim 1 or 2, characterized in that the tooth contour of the particular pressed-out toothing region (8a ; 6b) is smaller circumferentially than the tooth contour of the particular associated pressed-in toothing region (8b ; 6a).

**Revendications**

1. Ferrure d'articulation pour siège de véhicule automobile ayant un dossier réglable, dans laquelle une partie fixe (8) de l'articulation attachée au siège (12) et une partie basculante (6) de l'articulation attachée au dossier (13) sont reliées l'une à l'autre par l'intermédiaire d'un axe de basculement (7) et où une première partie (6) de l'articulation présente une couronne dentée intérieure (6a) sur laquelle roule un secteur à denture droite constituant une partie d'une commande de culbutage, qui est couplé à une seconde partie (8) de l'articulation, avec la particularité que la couronne dentée intérieure (8a) est réalisée d'une seule pièce avec la partie correspondante de l'articulation et se présente comme une saillie de cette partie de l'articulation, des ouvertures d'appui (6c, 8c) étant prévues dans les régions centrales de liaison des dentures (6a, 8a) pour recevoir l'axe de basculement (7), respectivement son excentrique (7a), caractérisée en ce que tant le diamètre que le périmètre des dents du secteur denté refoulé (8a ; 6b ; 8a′ ; 6b′) sont plus petits que le diamètre et le périmètre des dents de chaque secteur denté imprimé correspondant (8b ; 6a ; 8b′ ; 6a′), la largeur (b) des dents de chaque secteur denté actif étant ainsi supérieure à l'épaisseur (d) du matériau de départ.

2. Ferrure d'articulation suivant la revendication 1, caractérisée en ce que le secteur à denture droite (8a ; 8a′) est réuni d'une seule pièce à la partie (8 ; 8′) correspondante de l'articulation et en ce que la largeur (b) des dents du secteur à denture droite (8a ; 8a′) est plus grande que l'épaisseur du matériau de départ de la partie correspondante (8 ; 8′) de l'articulation.

3. Ferrure d'articulation suivant la revendication 1 ou 2, caractérisée en ce que le périmètre des dents de chaque secteur denté refoulé (8a ; 6b) est circonférentiellement plus petit que le périmètre des dents du secteur denté imprimé correspondant (8b ; 6a).

FIG. 1

2

**FIG.2**

III

6

16

16

15

10

15

15

8

14

11

III

**FIG.3**

16a  6

16

8a

6c

7a

e

7

8

15

FIG.4

FIG.5

IVa

8a

6a

6

Va

FIG.4a

d

8

8a

8c

6c

FIG.5a

d

6

8b

b

IVb

8

Vb

6a

b

6b

FIG.4b

FIG.5b

FIG. 6

FIG. 7

FIG. 6a

FIG. 7a

FIG. 6 b

FIG. 7 b